# FASCICULE DE BREVET EUROPEEN

(11) **EP 3 644 812 B1**
(45) Date de publication et mention de la délivrance du brevet: **14.04.2021**
(21) Numéro de dépôt: 18749452.1
(22) Date de dépôt: 25.06.2018
(51) Int. Cl.: A47J 43/042, A47J 43/046, A47J 43/07

(54) **PROCÉDÉ DE CONTRÔLE DE LA TEXTURE D'UNE PRÉPARATION CULINAIRE**
VERFAHREN ZUR STEUERUNG DER TEXTUR EINER KULINARISCHEN ZUBEREITUNG
METHOD FOR CONTROLLING THE TEXTURE OF A CULINARY PREPARATION

(30) Priorité: 27.06.2017 FR 1755908
(43) Date de publication de la demande: 06.05.2020
(73) Titulaire: SEB S.A., 69130 Ecully (FR)
(72) Inventeur: SCHMERBER, Louis, 38150 Roussillon (FR); LE GRAND, Olivier, 21380 Messigny et Vantoux (FR)
(74) Mandataire: SEB Développement
(86) Numéro de dépôt international: PCT/FR2018/051537
(87) Numéro de publication internationale: WO 2019/002738

(56) Documents cités:
- EP-A1- 1 834 559
- EP-A2- 2 394 549
- DE-A1-102010 060 650
- DE-A1-102013 106 691
- JP-A- H01 107 721

## Description

La présente invention se rapporte au domaine technique général de la préparation culinaire.

Plus particulièrement, la présente invention se rapporte à un procédé de contrôle de la texture d'une préparation culinaire réalisée à partir d'un appareil culinaire agencé pour mixer des ingrédients de ladite préparation ainsi qu'au dit appareil culinaire.

Il est connu de disposer d'un appareil culinaire pour mixer des ingrédients. Un tel appareil culinaire est par exemple un blender et comprend de manière connue un récipient agencé pour recevoir les ingrédients de ladite préparation, un outil agencé pour évoluer en rotation à l'intérieur dudit récipient afin de mixer lesdits ingrédients, un moteur agencé pour entrainer l'outil en rotation dans le récipient, et une interface de commande du moteur.

Un tel appareil est satisfaisant en ce qu'il permet de réaliser aisément la fonction consistant à mixer les ingrédients d'une préparation.

Cependant, un tel appareil culinaire ne permet pas de connaitre la texture de la préparation.

Or un utilisateur peut plus ou moins apprécier la préparation en fonction de cette texture.

Il est également connu, notamment du document JPH01107721, un procédé d'utilisation d'un appareil culinaire pour mixer les ingrédients d'une préparation présentant des textures différentes. Le document DE102013106691 décrit un appareil culinaire pour mixer des ingrédients d'une préparation culinaire.

Tout d'abord, les aliments sont mixés de manière à uniformiser la texture de la préparation.

Puis, deux mesures d'intensité du courant consommé par le moteur sont réalisées au cours d'un mode de fonctionnement pendant lequel le moteur est asservi en basse vitesse.

La première mesure de courant est réalisée environ 10 secondes après que les ingrédients aient été quasiment uniformément mixés et la deuxième mesure est réalisée 5 secondes plus tard.

La différence entre ces deux mesures est comparée à une valeur de référence.

En fonction de cette comparaison, la vitesse du moteur est ajustée dans les moyennes ou hautes vitesses.

Un tel appareil est satisfaisant en ce qu'il permet d'adapter automatiquement la vitesse du moteur en fonction d'un état réel de texture estimée d'une préparation.

Cependant, un tel appareil culinaire et un tel procédé ne permettent pas à un utilisateur d'anticiper la texture de la préparation et au besoin d'ajuster précisément cette texture de manière à retrouver une texture préférée de l'utilisateur.

Aussi, la présente invention a pour but de résoudre tout ou partie des inconvénients mentionnés ci-dessus, notamment en proposant un procédé de contrôle de la texture d'une préparation et un appareil culinaire permettant à l'utilisateur de se rendre compte de manière objective et en temps réel de la texture de sa préparation ainsi que de son évolution.

A cet effet, l'invention se rapporte à un procédé de contrôle de la texture d'une préparation culinaire réalisée à partir d'un appareil culinaire agencé pour mixer des ingrédients de ladite préparation, ledit appareil culinaire comprenant :
- un récipient agencé pour recevoir les ingrédients de ladite préparation,
- un outil agencé pour évoluer en rotation à l'intérieur dudit récipient afin de mixer lesdits ingrédients,
- un moteur agencé pour entrainer l'outil en rotation dans le récipient,
- une interface de commande du moteur,
ledit procédé comprenant les étapes suivantes :
- introduire tous les ingrédients de la préparation dans le récipient ou bien uniquement les ingrédients solides de la préparation dans le récipient ou bien encore les ingrédients solides de la préparation et une partie des ingrédients liquides de la préparation dans le récipient,
- actionner le moteur à l'aide de l'interface de commande selon un premier mode de fonctionnement dans lequel les ingrédients sont mixés dans le récipient,
- actionner le moteur selon un deuxième mode de fonctionnement adapté à l'estimation de la viscosité de tout ou partie de la préparation culinaire présente dans le récipient,
- estimer la viscosité de tout ou partie de la préparation culinaire présente dans le récipient,
- afficher sur un dispositif d'affichage une information représentative de la texture de la préparation culinaire présente dans le récipient.

La viscosité ainsi estimée est une viscosité instantanée de la préparation culinaire c'est-à-dire estimée en temps réel.

Un tel procédé permet à un utilisateur de quantifier en temps réel la texture de sa préparation culinaire de manière à lui indiquer si celle-ci lui convient ou non.

Selon une mise en œuvre, le procédé de contrôle comprend les étapes ultérieures suivantes :
- ajouter un fluidifiant ou un épaississant dans le récipient,
- afficher sur ledit dispositif d'affichage une information sur l'évolution de la texture de tout ou partie de la préparation due à l'ajout du fluidifiant ou de l'épaississant.

De telles étapes permettent à un utilisateur d'ajuster lui-même la texture de sa préparation culinaire selon ses goûts et ses envies.

Selon une mise en œuvre du procédé de contrôle le deuxième mode de fonctionnement implique un asservissement en vitesse du moteur.

Cette disposition permet d'améliorer l'estimation de la viscosité de tout ou partie de la préparation culinaire.

Selon une mise en œuvre du procédé de contrôle, la vitesse d'asservissement du moteur est comprise entre 1 et 5000 tr/min.

Cette disposition permet d'éviter la formation d'un vortex à l'intérieur du récipient qui viendrait fausser l'estimation de la viscosité de tout ou partie de la préparation culinaire.

Selon une mise en œuvre du procédé de contrôle, l'estimation de la viscosité est réalisée par déduction en comparant une valeur de mesure d'un paramètre représentatif d'un couple fourni par le moteur et une valeur de référence prédéterminée initialement ou bien par comparaison entre une valeur de mesure d'un paramètre représentatif d'un couple fourni par le moteur et un ensemble de valeurs de référence tabulées.

Selon une mise en œuvre, le procédé de contrôle comprend une étape préalable de sélection d'une préparation parmi une liste de préparations prédéterminées présentant toutes une texture cible, ledit procédé comprenant une étape ultérieure à l'étape d'affichage d'une information représentative de la texture de la préparation culinaire dans laquelle l'appareil culinaire émet un message d'alerte sur la nécessité d'ajouter du fluidifiant ou de l'épaississant pour atteindre la texture cible de la préparation sélectionnée.

Selon une mise en œuvre du procédé, le dispositif d'affichage s'adapte en fonction de la viscosité estimée de la préparation au début de l'étape d'estimation, en particulier le dispositif d'affichage adopte une échelle d'affichage appropriée à l'affichage d'une information sur l'évolution de la texture de tout ou partie de la préparation due à l'ajout du fluidifiant ou de l'épaississant.

La présente invention se rapporte également à un appareil culinaire pour mixer des ingrédients d'une préparation culinaire à préparer comprenant :
- un récipient agencé pour recevoir les ingrédients de ladite préparation,
- un outil agencé pour évoluer en rotation à l'intérieur du récipient afin de mixer lesdits ingrédients,
- un moteur agencé pour entrainer l'outil en rotation dans le récipient,
- une interface de commande du moteur,
   ledit appareil culinaire présentant une unité de commande agencée pour entrainer le moteur selon un premier mode de fonctionnement dans lequel la vitesse du moteur est adaptée pour mixer les ingrédients de tout ou partie de la préparation dans le récipient et un deuxième mode de fonctionnement dans lequel la vitesse du moteur est adaptée pour estimer la viscosité de tout ou partie de la préparation culinaire présente dans le récipient,
- des moyens d'estimation de la viscosité de tout ou partie de la préparation culinaire présente dans le récipient,
- un dispositif d'affichage d'une information représentative de la texture de la préparation culinaire présente dans le récipient.

Selon un aspect de l'invention, la vitesse du moteur lors d'un fonctionnement selon le premier mode de réalisation est supérieure à la vitesse du moteur lors d'un fonctionnement selon le deuxième mode de fonctionnement.

Selon un aspect de l'invention, le dispositif d'affichage est agencé pour afficher une information sur l'évolution de la texture de tout ou partie de la préparation.

Cette disposition permet à un utilisateur d'ajuster lui-même la texture de sa préparation culinaire selon ses goûts et ses envies.

Selon un aspect de l'invention, les moyens d'estimation de la viscosité de tout ou partie de la préparation comprennent :
- des moyens d'asservissement en vitesse du moteur,
- des moyens de mesure d'un paramètre représentatif d'un couple fourni par le moteur, et
- des moyens de traitement agencés pour estimer la viscosité par déduction en comparant une valeur de mesure du paramètre représentatif d'un couple fourni par le moteur et une valeur de référence prédéterminée initialement ou bien en comparant une valeur de mesure du paramètre représentatif d'un couple fourni par le moteur et un ensemble de valeurs de référence tabulées.

Selon un aspect de l'invention, l'appareil culinaire comprend une base de données comportant une liste de préparations prédéterminées présentant toutes une texture cible, des moyens de sélection d'une préparation parmi la liste de préparations prédéterminées et des moyens d'alerte sur la nécessité d'ajouter du fluidifiant ou de l'épaississant pour atteindre la texture cible de la préparation sélectionnée.

Cette disposition permet d'adapter l'échelle de valeurs de texture du dispositif d'affichage.

Selon un aspect de l'invention, le dispositif d'affichage comprend une série de diodes électroluminescentes ou le dispositif d'affichage comprend un écran d'affichage disposé sur l'appareil culinaire ou bien le dispositif d'affichage est déporté sur l'écran d'un dispositif de contrôle distant connecté à l'appareil culinaire.

D'autres avantages et caractéristiques de l'invention ressortiront mieux à la lecture de la description détaillée de l'invention faite à titre illustratif et non limitatif en référence aux figures qui illustrent tout ou partie d'un appareil culinaire pour mixer des ingrédients d'une préparation culinaire ainsi qu'un procédé de contrôle d'un tel appareil culinaire selon l'invention.
La figure 1 illustre un appareil culinaire selon l'invention.
La figure 2 illustre une interface de commande de l'appareil culinaire de la figure 1.

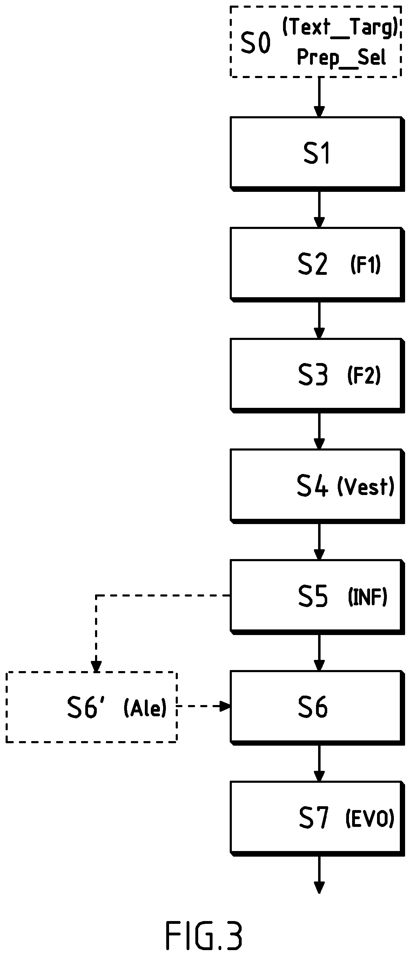

La figure 3 illustre une séquence d'étapes d'un procédé de contrôle d'un appareil culinaire selon l'invention.

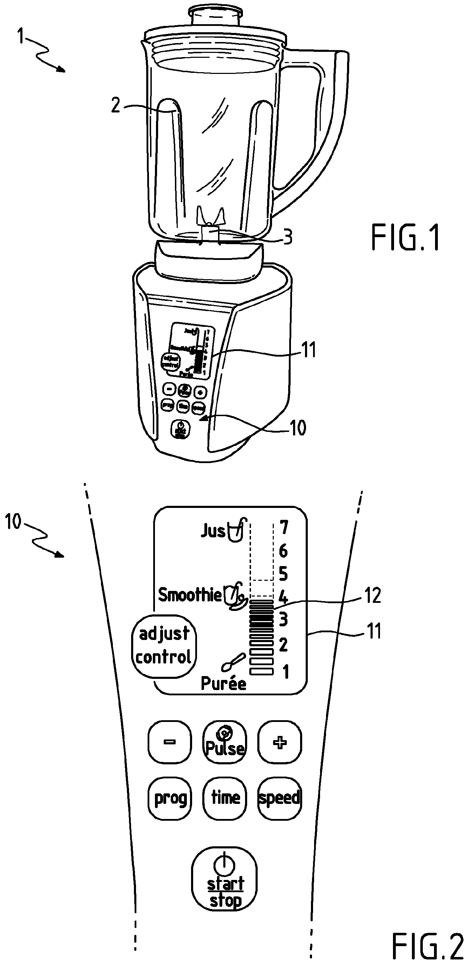

Comme illustré à la figure 1, un appareil culinaire 1 pour mixer des ingrédients d'une préparation culinaire selon l'invention comprend un récipient 2 agencé pour recevoir les ingrédients de ladite préparation, un outil 3 agencé pour évoluer en rotation à l'intérieur dudit récipient 2 afin de mixer lesdits ingrédients, un moteur (non illustré) agencé pour entrainer l'outil 3 en rotation dans le récipient 2 et une interface de commande 10 du moteur.

Le récipient 2 est de préférence transparent.

En outre, l'appareil culinaire 1 présente une unité de commande (non illustrée) agencée pour entrainer le moteur selon un premier mode de fonctionnement F1 et un deuxième mode de fonctionnement F2.

Dans le premier mode de fonctionnement F1, la vitesse du moteur est adaptée pour mixer les ingrédients de tout ou partie de la préparation dans le récipient 2.

Dans le deuxième mode de fonctionnement F2, la vitesse du moteur est adaptée pour estimer la viscosité Vest de tout ou partie de la préparation.

Enfin, l'appareil culinaire 1 comprend des moyens d'estimation (non illustrés) de la viscosité Vest de tout ou partie de la préparation ainsi qu'un dispositif d'affichage 11 d'une information INF représentative de la texture de tout ou partie de la préparation.

Comme illustré à la figure 2, le dispositif d'affichage 11 est adossé à l'interface de commande 10.

Dans le mode de réalisation présenté, le dispositif d'affichage 11 comprend une série de diodes électroluminescentes 12.

Afin de contrôler la texture d'une préparation réalisée à partir d'un tel appareil culinaire 1, l'utilisateur exécute un procédé dont les étapes sont décrites ci-après.

Au cours d'une première étape S1, l'utilisateur commence par introduire tous les ingrédients de la préparation dans le récipient 2 ou bien uniquement les ingrédients solides de la préparation dans le récipient 2 ou bien encore les ingrédients solides de la préparation et une partie des ingrédients liquides dans le récipient 2.

En effet, dans le cas où un des ingrédients de la préparation est un liquide alors l'utilisateur a la possibilité de ne verser qu'une quantité limitée de ce liquide dans le récipient 2 afin de pouvoir ajuster la texture de la préparation ultérieurement avec ce qui lui reste de liquide.

Une fois tout ou partie des ingrédients introduits dans le récipient 2, l'utilisateur, au cours d'une deuxième étape S2, actionne le moteur à l'aide de l'interface de commande 10 selon le premier mode de fonctionnement F1 du moteur.

Comme illustré à la figure 2, plusieurs boutons sont disponibles sur l'interface de commande 10 pour entrainer le moteur selon ce premier mode de fonctionnement F1, notamment des boutons de programmes « *prog* »*,* d'impulsion « *puise* » pour entrainer le moteur en rotation pendant l'appui de l'utilisateur sur ce bouton, et un bouton « *speed* » qui permet le réglage manuel d'une vitesse à l'aide de boutons plus « + » et moins « - ».

Lorsque le moteur fonctionne selon ce premier mode de fonctionnement F1 alors les ingrédients sont mixés dans le récipient 2.

L'utilisateur a alors la possibilité de juger visuellement la texture de sa préparation en appréciant visuellement la viscosité de celle-ci au travers du récipient 2 transparent.

Lorsque l'utilisateur l'estime nécessaire, et en particulier lorsqu'il veut pouvoir ajuster la texture de sa préparation, l'utilisateur, au cours d'une troisième étape S3, décide de faire fonctionner le moteur selon le deuxième mode de fonctionnement F2 du moteur.

Ce deuxième mode de fonctionnement F2 du moteur est adapté à l'estimation de la viscosité Vest de tout ou partie de la préparation versée dans le récipient 2.

C'est ainsi qu'afin de pouvoir estimer cette viscosité Vest, le moteur est asservi en vitesse.

En particulier, la vitesse d'asservissement est choisie de manière à éviter les phénomènes de cavitation pouvant être générés dans le récipient 2.

Cette vitesse d'asservissement du moteur est comprise entre 1 et 5000 tr/min.

A cette vitesse, l'impact de la quantité d'ingrédients dans le récipient 2 sur la viscosité de la préparation est limité.

Comme illustré à la figure 2, un bouton « *Adjust Control* » disposé sur l'interface de commande 10 est utilisé par l'utilisateur pour entrainer le moteur selon ce deuxième mode de fonctionnement F2.

Une quatrième étape S4 du procédé consiste à estimer la viscosité Vest de la préparation.

Une fois que le moteur est entrainé selon son deuxième mode de fonctionnement F2 alors l'estimation absolue de la viscosité Vest peut être réalisée à partir d'une valeur de mesure d'un paramètre représentatif d'un couple fourni par le moteur.

Ce paramètre représentatif d'un couple fourni par le moteur est par exemple l'intensité du courant consommé par le moteur.

Du fait que le moteur soit asservi en vitesse alors la tension d'alimentation du moteur est contrôlée.

Ainsi, l'intensité du courant est la variable la plus représentative de la charge qui s'exerce à l'encontre de la rotation de l'outil 3 dans le récipient 2.

Cette charge est elle-même directement liée à la viscosité de tout ou partie de la préparation disposée dans le récipient 2.

L'intensité du courant consommé par le moteur est ainsi mesurée lorsque le moteur est entrainé selon son deuxième mode de fonctionnement F2.

Dès lors, une estimation absolue de la viscosité Vest peut être réalisée par déduction en comparant cette valeur mesurée d'intensité du courant consommé et une valeur d'intensité de courant de référence prédéterminée initialement ou bien en comparant cette valeur mesurée d'intensité du courant consommé et des valeurs d'intensité de courant tabulées.

Enfin, au cours d'une cinquième étape S5, une information INF représentative de la texture de tout ou partie de la préparation est affichée sur le dispositif d'affichage 11.

Dans l'exemple présenté, cette information INF est matérialisée par l'allumage d'une quantité déterminée de diodes électroluminescentes 12.

Plus le nombre de diodes électroluminescentes 12 allumées est élevé et plus la texture de tout ou partie de la préparation se trouvant dans le récipient 2 est considérée comme se rapprochant de la texture d'un jus.

A l'inverse, un faible nombre de diodes électroluminescentes 12 allumées indiquera que la texture de tout ou partie de la préparation se trouvant dans le récipient 2 se rapproche de la texture d'une purée.

Bien entendu, d'autres moyens permettant de réaliser la fonction consistant à afficher cette information INF sont envisageables, par exemple via l'éclairage de pictogrammes représentant un état de texture d'une préparation culinaire.

L'utilisateur reçoit ainsi une information INF représentative de la texture de tout ou partie de la préparation se trouvant dans le récipient 2.

Par ailleurs, l'utilisateur a la possibilité d'ajuster cette texture en fonction de ses envies en ajoutant un fluidifiant ou un épaississant dans le récipient 2 au cours d'une sixième étape S6 ultérieure.

Le fluidifiant peut être tout ou partie des ingrédients liquides de la préparation qui n'avaient pas été versés précédemment dans le récipient 2.

Le fluidifiant peut par exemple être un liquide comme de l'eau ou du lait ajouté en plus aux ingrédients de la préparation.

L'épaississant peut quant à lui par exemple être de la farine ou tout autre ingrédient pouvant absorber un liquide.

L'ajout d'un fluidifiant aura pour effet de diminuer la viscosité de la préparation et donc de diminuer l'intensité du courant consommé par le moteur.

A l'inverse, l'ajout d'épaississant aura pour effet d'augmenter la viscosité de la préparation et donc d'augmenter l'intensité du courant consommé par le moteur.

Ainsi, au cours d'une septième étape S7, une information EVO sur l'évolution de la texture de tout ou partie de la préparation due à l'ajout du fluidifiant ou de l'épaississant est affichée sur ledit dispositif d'affichage 11.

Dans l'exemple présenté, cette information EVO est obtenue par l'évolution de la quantité de diodes électroluminescentes 12 allumées sur le dispositif d'affichage 11.

Ainsi, l'ajout d'un fluidifiant aura pour conséquence d'allumer un nombre supplémentaire de diodes électroluminescentes 12.

A l'inverse, l'ajout d'un épaississant aura pour conséquence d'éteindre un nombre supplémentaire de diodes électroluminescentes 12.

Afin d'agrandir l'échelle de valeurs de textures pouvant être indiquées par ces diodes électroluminescente 12, il est envisageable de concevoir un état intermédiaire au cours duquel la diode électroluminescente 12 clignote.

La fréquence du clignotement peut également être utilisée comme information EVO pour illustrer l'évolution de la texture de tout ou partie de la préparation culinaire due à l'ajout du fluidifiant ou de l'épaississant.

Cette information EVO peut également être affichée en modulant l'intensité d'éclairage des diodes électroluminescentes 12, notamment en faisant varier le rapport cyclique et donc la tension moyenne d'alimentation en utilisant une alimentation par modulation de largeur d'impulsion.

Les moyens décrits ci-dessus pour afficher l'information EVO sur l'évolution de la texture de la préparation culinaire peuvent être utilisés seuls ou en combinaison.

Selon une autre mise en œuvre du procédé, le procédé comprend une étape préalable S0 de sélection d'une préparation Prep_Sel parmi une liste de préparations prédéterminées présentant toutes une texture cible Text_Targ.

Cette sélection peut être réalisée directement sur l'appareil culinaire 1 ou bien via un dispositif de contrôle distant comme par exemple un smartphone ou une tablette.

Les ingrédients de la préparation sélectionnée Prep_Sel ainsi que leurs proportions sont communiqués à l'utilisateur lors du choix de cette sélection.

Les proportions peuvent éventuellement être modifiées au cours de cette sélection.

L'utilisateur indique alors les nouvelles proportions d'ingrédients via des moyens de sélection présents dans l'interface de commande.

Des moyens de traitement en déduisent alors une nouvelle valeur de la texture cible Text_Targ de la préparation culinaire sélectionnée Prep_Sel.

Ainsi, au cours d'une étape S6' ultérieure à l'étape S5 d'affichage d'une information INF représentative de la texture de la préparation, l'appareil culinaire 1 émet un message d'alerte Ale sur la nécessité d'ajouter du fluidifiant ou de l'épaississant pour atteindre la texture cible Text_Targ de la préparation culinaire sélectionnée Prep_Sel.

Ce message d'alerte Ale est émis par l'intermédiaire de moyens d'alerte (non illustrés) de l'appareil culinaire 1.

Les moyens d'alerte sont par exemple un haut-parleur ou bien une diode électroluminescente supplémentaire différente de celles utilisées dans le dispositif d'affichage 11.

Ces moyens d'alerte peuvent également être déportés sur un dispositif de contrôle distant connecté à l'appareil culinaire 1, tel un Smartphone ou une tablette.

Une telle alerte peut par exemple consister à émettre un son ou bien une lumière dont la fréquence varie en fonction de l'approche de la viscosité Vest estimée avec la texture cible Text_Targ.

La superposition de la viscosité Vest estimée avec la texture cible Text_Targ peut par exemple se traduire par l'émission d'un son continu via le haut-parleur ou d'une lumière continue via la diode électroluminescente supplémentaire.

Bien que l'invention ait été décrite en liaison avec des exemples particuliers de réalisation et d'application, il est bien évident qu'elle n'y est nullement limitée.

Des modifications restent possibles, notamment du point de vue de l'agencement et de la constitution des différents éléments ou par substitution d'équivalents techniques, sans sortir pour autant du domaine de protection de l'invention.

C'est ainsi que le passage du premier mode de fonctionnement F1 au deuxième mode de fonctionnement F2 du moteur peut être réalisé automatiquement sans intervention de l'utilisateur. Un tel passage peut être réalisé au bout d'un temps déterminé à partir du lancement du moteur ou bien lorsque la valeur de mesure d'un paramètre représentatif d'un couple fourni par le moteur pendant le premier mode de fonctionnement F1 est relativement stable.

Le bouton « *Adjust Control* » de l'interface de commande 10 n'est alors utilisé que pour déclencher l'étape S4 d'estimation de la viscosité Vest de tout ou partie de la préparation.

## Revendications

1. Procédé de contrôle de la texture d'une préparation culinaire réalisée à partir d'un appareil culinaire (1) agencé pour mixer des ingrédients de ladite préparation, ledit appareil culinaire (1) comprenant :
- un récipient (2) agencé pour recevoir les ingrédients de ladite préparation,
- un outil (3) agencé pour évoluer en rotation à l'intérieur dudit récipient (2) afin de mixer lesdits ingrédients,
- un moteur agencé pour entrainer l'outil (3) en rotation dans le récipient (2),
- une interface de commande (10) du moteur,
ledit procédé comprenant les étapes suivantes :
- (S1) introduire tous les ingrédients de la préparation dans le récipient (2) ou bien uniquement les ingrédients solides de la préparation dans le récipient (2) ou bien encore les ingrédients solides de la préparation et une partie des ingrédients liquides de la préparation dans le récipient (2),
- (S2) actionner le moteur à l'aide de l'interface de commande (10) selon un premier mode de fonctionnement (F1) dans lequel les ingrédients sont mixés dans le récipient (2),
- (S3) actionner le moteur selon un deuxième mode de fonctionnement (F2) adapté à l'estimation de la viscosité (Vest) de tout ou partie de la préparation culinaire présente dans le récipient (2),
- (S4) estimer la viscosité (Vest) de tout ou partie de la préparation culinaire présente dans le récipient (2), **caractérisé en ce que** le procédé comprend l'étape:
- (S5) afficher sur un dispositif d'affichage (11) une information (INF) représentative de la texture de la préparation culinaire présente dans le récipient (2).

2. Procédé de contrôle selon la revendication 1 comprenant les étapes ultérieures suivantes :
- (S6) ajouter un fluidifiant ou un épaississant dans le récipient (2),
- (S7) afficher sur ledit dispositif d'affichage (11) une information (EVO) sur l'évolution de la texture de tout ou partie de la préparation due à l'ajout du fluidifiant ou de l'épaississant.

3. Procédé de contrôle selon l'une des revendications 1 ou 2 dans lequel le deuxième mode de fonctionnement (F2) implique un asservissement en vitesse du moteur.

4. Procédé de contrôle selon la revendication 3, dans lequel la vitesse d'asservissement du moteur est comprise entre 1 et 5000 tr/min.

5. Procédé de contrôle selon l'une des revendications 1 à 4, dans lequel l'estimation de la viscosité (Vest) est réalisée par déduction en comparant une valeur de mesure d'un paramètre représentatif d'un couple fourni par le moteur et une valeur de référence prédéterminée initialement ou bien par comparaison entre une valeur de mesure d'un paramètre représentatif d'un couple fourni par le moteur et un ensemble de valeurs de référence tabulées.

6. Procédé de contrôle selon l'une des revendications 1 à 5, comprenant une étape préalable (S0) de sélection d'une préparation (Prep_Sel) parmi une liste de préparations prédéterminées présentant toutes une texture cible (Text_Targ), ledit procédé comprenant une étape ultérieure (S6') à l'étape (S5) d'affichage d'une information (INF) représentative de la texture de la préparation culinaire dans laquelle l'appareil culinaire (1) émet un message d'alerte (Ale) sur la nécessité d'ajouter du fluidifiant ou de l'épaississant pour atteindre la texture cible (Text_Targ) de la préparation sélectionnée (Prep_Sel).

7. Procédé selon l'une des revendications 1 à 6, dans lequel le dispositif d'affichage (11) s'adapte en fonction de la viscosité (Vest) estimée de la préparation au début de l'étape d'estimation (S4), en particulier le dispositif d'affichage (11) adopte une échelle d'affichage appropriée à l'affichage d'une information (EVO) sur l'évolution de la texture de tout ou partie de la préparation due à l'ajout du fluidifiant ou de l'épaississant.

8. Appareil culinaire (1) pour mixer des ingrédients d'une préparation culinaire à préparer comprenant :
- un récipient (2) agencé pour recevoir les ingrédients de ladite préparation,
- un outil (3) agencé pour évoluer en rotation à l'intérieur du récipient (2) afin de mixer lesdits ingrédients,
- un moteur agencé pour entrainer l'outil (3) en rotation dans le récipient (2),
- une interface de commande (10) du moteur,
ledit appareil culinaire (1) présentant une unité de commande agencée pour entrainer le moteur selon un premier mode de fonctionnement (F1) dans lequel la vitesse du moteur est adaptée pour mixer les ingrédients de tout ou partie de la préparation dans le récipient (2) et un deuxième mode de fonctionnement (F2) dans lequel la vitesse du moteur est adaptée pour estimer la viscosité (Vest) de tout ou partie de la préparation culinaire présente dans le récipient (2),
- des moyens d'estimation de la viscosité (Vest) de tout ou partie de la préparation culinaire présente dans le récipient (2), **caractérisé en ce que** l'appareil comprend:
- un dispositif d'affichage (11) d'une information (INF) représentative de la texture de la préparation culinaire présente dans le récipient (2).

9. Appareil culinaire (1) selon la revendication 8, dans lequel le dispositif d'affichage (11) est agencé pour afficher une information (EVO) sur l'évolution de la texture de tout ou partie de la préparation.

10. Appareil culinaire (1) selon l'une des revendications 8 ou 9, dans lequel les moyens d'estimation de la viscosité (Vest) de tout ou partie de la préparation comprennent :
- des moyens d'asservissement en vitesse du moteur,
- des moyens de mesure d'un paramètre représentatif d'un couple fourni par le moteur, et
- des moyens de traitement agencés pour estimer la viscosité (Vest) par déduction en comparant une valeur de mesure du paramètre représentatif d'un couple fourni par le moteur et une valeur de référence prédéterminée initialement ou bien en comparant une valeur de mesure du paramètre représentatif d'un couple fourni par le moteur et un ensemble de valeurs de référence tabulées.

11. Appareil culinaire (1) selon l'une des revendications 8 à 10, comprenant une base de données comportant une liste de préparations prédéterminées présentant toutes une texture cible (Text_Targ), des moyens de sélection d'une préparation (Prep_Sel) parmi la liste de préparations prédéterminées et des moyens d'alerte sur la nécessité d'ajouter du fluidifiant ou de l'épaississant pour atteindre la texture cible de la préparation sélectionnée.

12. Appareil culinaire (1) selon l'une des revendications 8 à 11, dans lequel le dispositif d'affichage (11) comprend une série de diodes électroluminescentes (12) ou le dispositif d'affichage (11) comprend un écran d'affichage disposé sur l'appareil culinaire (1) ou bien le dispositif d'affichage (11) est déporté sur l'écran d'un dispositif de contrôle distant connecté à l'appareil culinaire (1).

## Patentansprüche

1. Verfahren zur Steuerung der Textur einer kulinarischen Zubereitung, die ausgehend von einer kulinarischen Einrichtung (1) erzeugt wird, die angeordnet ist, um Zutaten der Zubereitung zu mischen, wobei die kulinarische Einrichtung (1) Folgendes umfasst:
- einen Behälter (2), der ausgeführt ist, um die Zutaten der Zubereitung aufzunehmen,
- ein Werkzeug (3), das ausgeführt ist, um sich im Inneren des Behälters (2) drehend zu bewegen, um die Zutaten zu mischen,
- einen Motor, der ausgeführt ist, um das Werkzeug (3) in dem Behälter (2) in Drehung anzutreiben,
- eine Schnittstelle zur Steuerung (10) des Motors,
wobei das Verfahren die folgenden Schritte umfasst:
- (S1) Einbringen aller Zutaten der Zubereitung in den Behälter (2) oder aber lediglich der festen Zutaten der Zubereitung in den Behälter (2) oder aber der festen Zutaten der Zubereitung und einen Teil der flüssigen Zutaten der Zubereitung in den Behälter (2),
- (S2) Betätigen des Motors mithilfe der Schnittstelle zur Steuerung (10) entsprechend einem ersten Betriebsmodus (F1), bei dem die Zutaten in dem Behälter (2) gemischt werden,
- (S3) Betätigen des Motors entsprechend einem zweiten Betriebsmodus (F2), der zur Schätzung der Viskosität (Vest) der gesamten kulinarischen Zubereitung, die in dem Behälter (2) vorhanden ist, oder eines Teils davon angepasst ist,
- (S4) Schätzen der Viskosität (Vest) der gesamten kulinarischen Zubereitung, die in dem Behälter (2) vorhanden ist, oder eines Teils davon, **dadurch gekennzeichnet, dass** das Verfahren den folgenden Schritt umfasst:
- (S5) Anzeigen an einer Anzeigevorrichtung (11) einer für die Textur der kulinarischen Zubereitung, die in dem Behälter (2) vorhanden ist, repräsentativen Information (INF).

2. Verfahren zur Steuerung nach Anspruch 1, die folgenden weiteren Schritte umfassend:
- (S6) Beigeben eines Verflüssigers oder Eindickers in den Behälter (2),
- (S7) Anzeigen an der Anzeigevorrichtung (11) einer Information (EVO) über die Entwicklung der Textur der gesamten Zubereitung oder eines Teils davon aufgrund der Beigabe des Verflüssigers oder des Eindickers.

3. Verfahren zur Steuerung nach einem der Ansprüche 1 oder 2, wobei der zweite Betriebsmodus (F2) eine Geschwindigkeitsansteuerung des Motors impliziert.

4. Verfahren zur Steuerung nach Anspruch 3, wobei die Ansteuerungsgeschwindigkeit des Motors zwischen 1 und 5000 U./Min. enthalten ist.

5. Verfahren zur Steuerung nach einem der Ansprüche 1 bis 4, wobei die Schätzung der Viskosität (Vest) durch einen Rückschluss durch Vergleichen eines Messwertes eines für ein Moment repräsentativen Parameters, das durch den Motor bereitgestellt wird, und einem ursprünglich vorbestimmten Referenzwert, oder aber durch Vergleichen zwischen einem Messswert eines für ein Moment repräsentativen Parameters, das durch den Motor bereitgestellt wird, und einer Reihe von Tabulatorreferenzwerten.

6. Verfahren zur Steuerung nach einem der Ansprüche 1 bis 5, umfassend einen vorbereitenden Schritt (S0) zur Auswahl einer Zubereitung (Prep_Sel) aus einer Liste von vorbestimmten Zubereitungen, die allesamt eine Zieltextur (Tex_Targ) aufweisen, wobei das Verfahren einen dem Schritt (S5) zum Anzeigen einer für die Textur der kulinarischen Zubereitung repräsentativen Information (INF) nachfolgenden Schritt (S6') umfasst, bei dem die kulinarische Einrichtung (1) eine Warnmeldung (Ale) über die Notwendigkeit ausgibt, einen Verflüssiger oder Eindicker beizugeben, um die Zieltextur (Tex_Targ) der ausgewählten Zubereitung (Prep_Sel) zu erreichen.

7. Verfahren nach einem der Ansprüche 1 bis 6, wobei sich die Anzeigevorrichtung (11) in Abhängigkeit von der geschätzten Viskosität (Vest) der Zubereitung zu Beginn des Schätzschrittes (S4) anpasst, wobei die Anzeigevorrichtung (11) insbesondere eine für die Anzeige einer Information (EVO) über die Entwicklung der Textur der gesamten Zubereitung oder eines Teils davon aufgrund der Beigabe eines Verflüssigers oder Eindickers angepassat Anzeigeskala annimmt.

8. Kulinarische Einrichtung (1) zum Mischen der Zutaten einer zuzubereitenden kulinarischen Zubereitung, Folgendes umfassend:
- einen Behälter (2), der ausgeführt ist, um die Zutaten der Zubereitung aufzunehmen,
- ein Werkzeug (3), das ausgeführt ist, um sich im Inneren des Behälters (2) drehend zu bewegen, um die Zutaten zu mischen,
- einen Motor, der ausgeführt ist, um das Werkzeug (3) in dem Behälter (2) in Drehung anzutreiben,
- eine Schnittstelle zur Steuerung (10) des Motors,
wobei die kulinarische Einrichtung (1) eine Steuereinheit aufweist, die ausgeführt ist, um den Motor entsprechend einem ersten Betriebsmodus (F1), bei dem die Geschwindigkeit des Motors angepasst wird, um die Zutaten der gesamten Zubereitung in dem Behälter (2) oder eines Teils davon zu mischen, und einem zweiten Betriebsmodus (F2) anzutreiben, bei dem die Geschwidigkeit des Motors angepasst wird, um die Viskostität (Vest) der gesamten kulinarischen Zubereitung, die in dem Behälter (2) vorhanden ist, oder eines Teils davon zu schätzen,
- Mittel zum Schätzen der Viskosität (Vest) der gesamten kulinarischen Zubereitung, die in dem Behälter (2) vorhanden ist, oder eines Teils davon, **dadurch gekennzeichnet, dass** die Einrichtung umfasst:
- eine Anzeigevorrichtung (11) einer Information (INF), die repräsentativ für die Textur der in dem Behälter (2) vorhandenen kulinarischen Zubereitung ist.

9. Kulinarische Einrichtung (1) nach Anspruch 8, wobei die Anzeigevorrichtung (11) ausgeführt ist, um eine Information (EVO) über die Entwicklung der Textur der gesamten Zubereitung oder eines Teils davon anzuzeigen.

10. Kulinarische Einrichtung (1) nach einem der Ansprüche 8 oder 9, wobei die Mittel zum Schätzen der Viskosität (Vest) der gesamten kulinarischen Zubereitung oder eines Teils davon umfassen:
- Mittel zur Geschwindigkeitsansteuerung des Motors,
- Mittel zum Messen eines für ein durch den Motor bereitgestelltes Moment repräsentativen Parameters, und
- Verarbeitungsmittel, die ausgeführt sind, um die Viskosität (Vest) durch einen Rückschluss durch Vergleichen eines Messwertes eines für ein Moment repräsentativen Parameters, das durch den Motor bereitgestellt wird, und einem ursprünglich vorbestimmten Referenzwert, oder aber durch Vergleichen zwischen einem Messswert eines für ein Moment repräsentativen Parameters, das durch den Motor bereitgestellt wird, und einer Reihe von Tabulatorreferenzwerten, zu schätzen.

11. Kulinarische Einrichtung (1) nach einem der Ansprüche 8 bis 10, umfassend eine Datenbank, die eine Liste mit vorbestimmten Zubereitungen beinhaltet, die allesamt eine Zieltextur (Tex_Targ) aufweisen, Mittel zum Auswählen einer Zubereitung (Prep_Sel) aus der Liste mit vorbestimmten Zubereitungen, und Mittel zum Warnen hinsichtlich der Notwendigkeit, einen Verflüssiger oder Eindicker beizugeben, um die Zieltextur der ausgewählten Zubereitung zu erreichen.

12. Kulinarische Einrichtung (1) nach einem der Ansprüche 8 bis 11, wobei die Anzeigevorrichtung (11) eine Reihe von elektroluminiszierenden Dioden (12) umfasst, oder die Anzeigevorrichtung (11) einen Anzeigebildschirm umfasst, der auf der kuinarischen Einrichtung (1) angeordnet ist, oder aber die Anzeigevorrichtung (11) auf den Bildschirm einer entfernten Steuervorrichtung ausgelagert ist, die mit der kuinarischen Einrichtung (1) verbunden ist.

## Claims

1. Method for controlling the texture of a culinary preparation made with a culinary apparatus (1) arranged for mixing ingredients said preparation, said culinary apparatus (1) comprising:
- a container (2) arranged to receive the ingredients of said preparation,
- a tool (3) arranged to rotatably evolve inside said container (2) in order to mix said ingredients,
- a motor arranged to rotate the tool (3) in the container (2),
- a control interface (10) of the motor,
said method comprising the following steps:
- (51) placing all of the ingredients of the preparation in the container (2) or the solid ingredients of the preparation in the container (2) or also the solid ingredients of the preparation and a portion of the liquid ingredients of the preparation in the container (2),
- (S2) operating the motor using the control interface (10) according to a first operating mode (F1) in which the ingredients are mixed in the container (2),
- (S3) operating the motor according to a second operating mode (F2) suitable for estimating the viscosity (Vest) of all or a portion of the culinary preparation present in the container (2),
- (S4) estimating the viscosity (Vest) of all or some of the culinary preparation present in the container (2), **characterised in that** the method comprises the step:
- (S5) of displaying on a display device (11) information (INF) representative of the texture of the culinary preparation present in the container (2).

2. Control method according to claim 1 comprising the following steps:
- (S6) adding a thinner or a thickener in the container (2),
- (S7) displaying on said display device (11) information (EVO) on the evolution of the texture of all or a portion of the generation due to the addition of the thinner or of the thickener.

3. Control method according to one of claims 1 or 2, wherein the second operating mode (F2) involves a subservience in speed of the motor.

4. Control method according to claim 3, wherein the subservience speed of the motor is comprised between 1 and 5000rpm.

5. Control method according to one of claims 1 to 4, wherein the estimation of the viscosity (Vest) is done by deduction by comparing a measurement value of a parameter representative of a torque provided by the motor and a predetermined reference value initially or by comparison between a measurement value of a parameter representative of a torque provided by the motor and a set of tabulated reference values.

6. Control method according to one of claims 1 to 5, comprising a prior list (S0) of selecting a preparation (Prep_Sel) from among a list of predetermined preparations all having a target texture (Text_Targ), said method comprising a subsequent step (S6') to step (S5) of displaying information (INF) representative of the texture of the culinary preparation wherein the culinary apparatus (1) sends an alert message (Ale) on the need to add the thinner or the thickener to achieve the target texture (Text_Targ) of the preparation selected (Prep_Sel).

7. Method according to one of claims 1 to 6, wherein the display device (11) is suitable according to the estimated viscosity (Vest) of the preparation at the start of the estimation step (S4), in particular the display device (11) adopts a display scale suitable for the displaying of information (EVO) on the evolution of the texture of all or a portion of the preparation due to the addition of the thinner or of the thickener.

8. Culinary apparatus (1) for mixing ingredients of a culinary preparation to be prepared comprising:
- a container (2) arranged to receive the ingredients of said preparation,
- a tool (3) arranged to rotatably evolve inside the container (2) in order to mix said ingredients,
- a motor arranged to rotate the tool (3) in the container (2),
- a control interface (10) of the motor,
said culinary apparatus (1) having a control unit arranged to drive the motor according to a first operating mode (F1) wherein the speed of the motor is suitable for mixing the ingredients of all or a portion of the preparation in the container (2) and a second operating mode (F2) wherein the speed of the motor is suitable for estimating the viscosity (Vest) of all or a portion of the culinary preparation present in the container (2),
- means for estimating the viscosity (Vest) of all or a portion of the culinary preparation present in the container (2), **characterised in that** the apparatus comprises:
- a device for displaying (11) information (INF) representative of the texture of the culinary preparation present in the container (2).

9. Culinary apparatus (1) according to claim 8, wherein the display device (11) is arranged to display information (EVO) on the evolution of the texture of all or a portion of the preparation.

10. Culinary apparatus (1) according to one of claims 8 or 9, wherein the means for estimating the viscosity (Vest) of all or a portion of the preparation comprise:
- speed subservience means of the motor,
- means for measuring a parameter representative of a torque provided by the motor, and
- processing means arranged to estimate the viscosity (Vest) by deduction by comparing a measurement value of the parameter representative of a torque provided by the motor and a predetermined reference value initially or by comparing a measurement value of the parameter representative of a torque provided by the motor and a set of tabulated reference values.

11. Culinary apparatus (1) according to one of claims 8 to 10, comprising a database comprising a list of predetermined preparations all having a target texture (Text_Targ), means for selecting a preparation (Prep_Sel) from among the list of predetermined preparations and means for alerting on the need to add the thinner or the thickener to achieve the target texture of the preparation selected.

12. Culinary apparatus (1) according to one of claims 8 to 11, wherein the display device (11) comprises a series of light-emitting diodes (12) of the display device (11) comprises a display screen disposed on the culinary apparatus (1) or the display device (11) is deported on the screen of a remote control device connected to the culinary apparatus (1).
